# EUROPÄISCHE PATENTSCHRIFT

(11) **EP 3 302 947 B1**
(45) Veröffentlichungstag und Bekanntmachung des Hinweises auf die Patenterteilung: **15.04.2020**
(21) Anmeldenummer: 16741527.2
(22) Anmeldetag: 25.05.2016
(51) Int. Cl.: B29D 30/06

(54) **HÖHENLAGEFIXIERUNG EINES BEHANDLUNGSRAUMES**
BLOCKING THE VERTICAL POSITION OF A TREATMENT CHAMBER
FIXATION DE LA HAUTEUR D'UNE CHAMBRE DE TRAITEMENT

(30) Priorität: 28.05.2015 DE 102015007201
(43) Veröffentlichungstag der Anmeldung: 11.04.2018
(73) Patentinhaber: Harburg-Freudenberger Maschinenbau GmbH, 21079 Hamburg (DE)
(72) Erfinder: BAHLKE, Stefan, 21337 Lüneburg (DE)
(74) Vertreter: Klickow & Wetzel PartGmbB
(86) Internationale Anmeldenummer: PCT/DE2016/000224
(87) Internationale Veröffentlichungsnummer: WO 2016/188510

(56) Entgegenhaltungen:
- FR-A1- 2 627 723
- FR-A1- 2 966 075
- US-A- 3 550 196
- US-A1- 2015 079 210

## Beschreibung

Die Erfindung betrifft eine Höhenlagefixierung eines Behandlungsraumes innerhalb einer Reifenvulkanisiermaschine zur Festlegung von Behandlungsraumelementen zumindest während eines Vulkanisationsprozesses, sodass in der Geschlossenstellung wenigstens ein definierter Höhenabstand H fixierbar ist und wobei Fixierungsmittel an zumindest einem Behandlungsraumelement vorgesehen und derart ausgebildet sind, dass eine lösbare und eine die auftretenden Kräfte aufnehmende Fixierung unterstützt ist.
Die Herstellung eines Reifens beispielsweise für Fahrzeuge wie Autos oder Motorräder, ist ein extrem aufwändiger Prozess, der aus einer Vielzahl von Herstellung- und Prozessschritten besteht. Ursächlich dafür ist der komplizierte, aus einer erheblichen Zahl von verschiedenen Einzelkomponenten bestehende Reifenaufbau. Hinzu kommt, dass diese Vielzahl von Komponenten unter Druck- und Temperatureinwirkung, der sogenannten Vulkanisierung miteinander verbunden werden müssen. Der Vulkanisierungsprozess ist ebenfalls maßgeblich hinsichtlich der Material- und Haftungseigenschaften des fertigen Reifens.

Aus diesem Grund ist einer der wesentlichen Produktionsschritte zur Herstellung von Reifen das Vulkanisieren von Reifenrohlingen hin zu einem fertigen Reifen. Dazu wird der Reifenrohling in eine Form beziehungsweise Reifenform eingelegt, die sich innerhalb einer Reifenvulkanisiermaschine befindet und anschließend auf die materialabhängige Vulkanisiertemperatur erwärmt sowie mit einem Vulkanisierdruck innenseitig des Reifenrohlings beaufschlagt. Um die Vulkanisiertemperatur und den Vulkanisierdruck zu erreichen, wird ein geeignetes Heizmedium mit einer entsprechenden Temperatur und unter Druckbeaufschlagung in den Innenraum des Reifenrohlings eingebracht.

Grundsätzlich hat die Vulkanisation das Ziel, einen Reifenrohling durch Temperatur-und Druckbeaufschlagung innerhalb einer oder mehrerer Zeitintervalle praktisch "fertig zu backen", das heißt die Komponenten des Reifenrohlings miteinander zu verbinden und den Basismaterialien sowie der Gummi-/Kautschukschicht durch Vernetzungsprozesse elastische Eigenschaften einzuprägen. Dazu sind neben der eigentlichen Druck- und Temperaturbeaufschlagung weiterhin unterschiedliche, auf den Basiswerkstoff abgestimmte Additivsubstanzen für die Vernetzung und ggf. die Vernetzungsbeschleunigung erforderlich.

Zur Durchführung einer Vulkanisierung des elastomeren Materials muss eine beträchtliche Wärmeenergiemenge in das Material eingebracht werden. Dazu ist es überwiegend nicht ausreichend, den zu vulkanisierenden Reifenrohling innenseitig mit einer Vulkanisierungstemperatur und einem Vulkanisierungsdruck zu beaufschlagen.

Um die für den Vulkanisationsprozess erforderliche Wärmeenergiemenge und Druckbeaufschlagung zu realisieren, wird alternativ oder additiv aussenseitig des Reifenrohlings in der Vulkanisiermaschine eine Druck- und/oder Temperatureinwirkung auf den Reifenrohling vorgesehen. Dazu ist üblicherweise ein Behandlungsraum installiert, der eine Reifenform umfasst und geöffnet beziehungsweise geschlossen werden kann, sodass der zu vulkanisierende Reifenrohling eingelegt, vulkanisiert und entnommen werden kann.

Besonders dicke Bereiche des Reifenrohlings sind die Laufflächen. Relativ dünn sind die Seitenwandungen ausgebildet. Ursächlich für diesen deutlichen Dickenunterschied sind die im Bereich der Lauffläche angeordneten zusätzlichen Reifenkomponenten wie Stahlgürtel, Gürtelabdecklage und die im Vergleich zur Seitenwandung erheblich dickere Gummi-/Kautschukschicht. Diese erheblich dickere Gummi-/Kautschukschicht weist nicht zuletzt deshalb mehr Wanddicke auf, weil sie das eigentliche Reifenprofil umfasst, das während des Vulkanisierprozesses hergestellt wird. Dazu muss der Laufflächenbereich bzw. die dort vorgesehene dickwandige Gummi-/Kautschukmasse soweit erhitzt werden, dass sie plastisch fließen kann und durch den Vulkanisationsdruck in die Profil-Negativmatrize der Reifenrohlingsform der Reifenvulkanisiermaschine gepresst werden kann. Die plastische Fließfähigkeit nimmt in einem weiten Bereich mit steigender Erhitzung des Materials zu, sodass weniger Pressdruck erforderlich ist, um die Profilierung zuverlässig herstellen zu können.

Aufgrund der erforderlichen Vulkanisierungstemperaturen von bis zu 200 Grad Celsius, häufig im Bereich von ca. 160 Grad Celsius, innerhalb des Behandlungsraums beziehungsweise der Reifenform liegt ein erheblicher Temperaturgradient vor zwischen dem Maschineninneren und dem üblicherweise Raumtemperatur aufweisenden Umfeld der Reifenvulkanisiermaschine. Diese Situation ist neben der grundsätzlichen Anforderung des Maschinenbetriebs unter Beachtung möglichst energieeffizienter Ressourcenschonung verantwortlich dafür, dass Wärmeverluste insbesondere durch Konvektion über die Oberfläche des Behandlungsraumes der Reifenvulkanisiermaschine reduziert werden müssen.

Viele Reifenvulkanisiermaschinen sind derart konstruiert, dass der Behandlungsraum funktionelles Kernelement ist. Der Behandlungsraum dient entweder direkt zur Aufnahme des zu vulkanisierenden Reifenrohlings oder einer Reifenform oder einem sogenannten Container und ist in seiner räumlichen Erstreckung begrenzt durch eine Grundplatte mit Formdruckplatte und eine Formgegendruckplatte sowie einen vorzugsweise zylindrischen Zugmantel. Alle raumbegrenzenden Bauteile des Behandlungsraumes sind an den Wärmeverlusten vor allem durch Konvektion beteiligt. Insbesondere der Zugmantel mit seiner erheblich großen Oberfläche verursacht dabei große Wärmeverluste.

Nicht nur die konvektionsbedingten Wärmeverluste haben direkten Einfluss auf die Energiebilanz der Reifenvulkanisiermaschine. Auch die Größe und insbesondere das Raumvolumen des Behandlungsraumes ist in dieser Hinsicht ein nicht unerheblicher Faktor. Im Idealfall ist der Behandlungsraum derart dimensioniert, dass der jeweils zu vulkanisierende Reifenrohling mit oder ohne einen optional umhüllenden Container beziehungsweise eine Reifenform aufnehmbar ist. Dabei muss beachtet werden, dass der Behandlungsraum geöffnet und geschlossen werden können muss. Auch muss zumindest in einer Geöffnetstellung ein Handhabungsraum unterstützt sein, um das Handling der Reifenrohlinge beziehungsweise Fertigreifen durch Entladen und Beladen des Behandlungsraumes zu gewährleisten.

Um energetisch günstig und funktionell sinnvoll die Reifenvulkanisation insbesondere bei wechselweise verschieden dimensionierter Reifen durchführen zu können, ist es erforderlich, dass zumindest die Höhe des Behandlungsraumes und/oder dessen lichte Weite durch geeignete Maßnahmen beeinflussbar und anpassbar ist.

Ein weiteres Anforderungskriterium an den Behandlungsraum ist die innere und/oder äußere Druckbeaufschlagung des zu vulkanisierenden Reifenrohlings. Um die für den Vulkanisationsprozess erforderliche Wärmeenergiemenge und Druckbeaufschlagung zu realisieren wird alternativ oder additiv aussenseitig des Reifenrohlings in der Vulkanisiermaschine eine Druck- und/oder Temperatureinwirkung auf den Reifenrohling vorgesehen. Dazu ist üblicherweise eine Behandlungskammer installiert, die als Reifenform bezeichnet wird und geöffnet beziehungsweise geschlossen werden kann, sodass der zu vulkanisierende Reifenrohling eingelegt, vulkanisiert und entnommen werden kann.

Dem allgemeinen physikalischen Prinzip der allseitigen Druckausbreitung folgend, muss der Behandlungsraum und/oder die Behandlungskammer beziehungsweise die Reifenform die Press- und Druckkräfte sowohl in radialer als auch in axialer Richtung abstützen und aufnehmen. Infolge dessen müssen die Bewegungseinrichtungen zum Öffnen und Schließen der Reifenform, unabhängig davon, ob die Reifenform längs oder quer zur Rotationsachse des zu vulkanisierenden Reifens angeordnet ist, üblicherweise nicht nur die Kräfte zur Bewegung wenigstens einer Formhälfte aufbringen, sondern diese müssen auch ausreichend dimensioniert sein hinsichtlich der Schließkräfte bei der Reifenvulkanisation. Aufgrund der bis zu mehren kN reichenden Schließkräfte werden neben mechanischen Lösungen wie beispielsweise Kniehebelkonstruktionen oder Spindeln meist Hochdruck-Fluidzylinder eingesetzt.

Vorrichtungen dieser Art integrieren zwar sowohl die Bewegungsfunktion als auch die Schließkraftfunktion, sind aber axial sehr hochbauend und je nach Ausführung empfindlich auf Radialkräfte und hohe Temperaturen beziehungsweise Temperaturgradienten.

Ein Ansatz zur Überwindung dieses Problemkomplexes kann darin bestehen, die Schließkraftfunktion von der Bewegungsfunktion vorrichtungstechnisch zu trennen. Bei einer derartigen Funktionstrennung muss optional eine Arretierungsfunktion ergänzend vorgesehen werden, die unter bestimmten Voraussetzungen auch innerhalb der Bewegungseinrichtung verwirklicht sein kann.

Um eine geeignete und vorteilhafte Schließkrafteinheit für die isoliert von der Bewegungsfunktion zu realisierende Schließkraftfunktion zu schaffen, wird vorgeschlagen, insbesondere Linearantriebe basierend auf dem Plungerzylinderprinzip konstruktiv in die Reifenvulkanisiermaschine zu integrieren. Dazu wird wenigstens ein Fluidzylinder als integrativer Bestandteil der Reifenvulkanisierform und/oder der Maschinenkomponenten ausgeführt.

Es ist vorgesehen, den aus Kolben und gegebenenfalls Kolbenstange sowie Zylindergehäuse bestehenden Fluidzylinder nicht als separates Zukaufteil einzubringen, sondern einen fluidischen Linearantrieb in die Grundplatte oder Basisplatte der Reifenvulkanisiermaschine in integrativer Weise zu konstruieren.

Die integrative Bauweise kann realisiert werden durch die direkte Nutzung der Grundplatte als Zylindergehäuse. Dazu werden entsprechend der notwendigen Anzahl der fluidischen Linearantriebe Bohrungen in die Grundplatte eingebracht, die je nach Ausführungsform des fluidischen Linearantriebs als Durchgangsbohrung und/oder als Sackloch ausgeführt sein können. Auf diese Weise können sowohl Kolben-Kolbenstangen-Linearantriebe als auch Kolben-Linearantriebe basierend auf dem Plungerzylinderprinzip integriert werden.

Wird eine solche Schließkrafteinheit zur Bereitstellung der Schließkraftfunktion verwendet, muss eine die Bewegungsfunktion realisierende Bewegungseinrichtung hinzutreten, um das Öffnen und Schließen der Reifenform beziehungsweise des Behandlungsraumes und damit der Kavität der Reifenvulkanisiermaschine zu bewerkstelligen.

Bewegungseinrichtungen zur Bereitstellung der Bewegungsfunktion können durch eine von der Schließkrafteinheit entkoppelten Vorrichtung mit einem Linearantrieb und einer Linearführungseinheit in integrativer oder separater Weise aufgebaut sein. Vielfältige Möglichkeiten wie beispielsweise Fluidzylinder, elektrische Linearantriebe, Spindeln und Kugelrollspindeln beziehungsweise Führungen verschiedenster Art bieten sich dazu an.

In dem Zusammenhang der Funktionstrennung von Schließkraftfunktion und Bewegungsfunktion muss in vielen Fällen eine weitere Funktionsaufgabe gelöst werden: Die Höhenlagefixierung wenigstens eines der behandlungsraumbildenden Elemente.

Diese Festlegung muss gegen die Schließkraft und/oder die durch den Behandlungsrauminnendruck resultierenden Druckkräfte erfolgen, da in den meisten Fällen die Bewegungseinrichtungen nicht oder nicht wirtschaftlich dafür ausgelegt werden können.

Aus der US 2015/079210 A1 ist bereits eine Reifenvulkanisiermaschine mit einer Höhenlagenfixierung für einen Behandlungsraum bekannt. An einem Element des Behandlungsraumes sind hierbei Fixierungsmittel vorgesehen.

In der FR 2 627 723 A1 wird ebenfalls eine Maschine zum Vulkanisieren von Reifen beschrieben. Gleichfalls erfolgt eine Beschreibung einer derartigen Maschine in der US 3 550 196 A.

Eine vergleichbare Reifenheizpresse wird in der FR 2 966 075 A1 erläutert.

Es ist Aufgabe der Erfindung, eine Höhenlagefixierung wenigstens eines der behandlungsraumbildenden Elemente bereitzustellen, welche die genannte Funktion wenigstens teilweise realisiert und eine kosteneffiziente Gesamtkonstruktion unterstützt.

Zur Lösung schlägt die erfindungsgemäße Lehre vor, dass die Fixierungsmittel wenigstens im Bereich eines Zugmantels derart vorgesehen sind, dass die Fixierungsmittel wenigstens in einem Abschnitt der Innenwandung des Zugmantels vorgesehen sind und dass die Fixierungsmittel durch wenigstens eine Längs- und Quernutkombination gebildet sind.

Ein zu diesem Zweck geeigneter Zugmantel ist ein vorzugsweise zylindrisches Bauteil, das zumindest teilweise den Behandlungsraum geometrisch begrenzt und über ausreichend hohe mechanische Festigkeit, Widerstand gegen auftretende Temperaturgradienten und strukturelle Integrität verfügt.

Insbesondere ist daran gedacht, einen Zugmantel mit implementierten Führungsmitteln derart zu verwenden, dass die Fixierungsmittel mit einem wenigstens kraftschlüssigen Element der Schließkrafteinheit zusammenwirken.

Die Erfindung sieht vor, dass die Fixierungsmittel konstruktiv-integraler Bestandteil des Behandlungsraumes und insbesondere des Zugmantels als wenigstens ein Element dieses Behandlungsraumes sind.

Konstruktiv realisiert sind die Fixierungsmittel durch einen dem Bajonettprinzip verwandten Mechanismus. Dazu wird in einem behandlungsraumbegrenzenden Bauteil wenigstens ein Vorsprung vorgesehen, der beispielsweise die Form einer nasen-oder stiftartigen Auskragung aufweist und mit wenigstens einer korrespondierenden Längs- und Quernutkombination in dem Zugmantel zusammenwirkt. Die wenigstens eine Längsnut dient bei funktionellem Eingriff des wenigstens einen Vorsprungs in die Nutkombination zur Unterstützung eines Freiheitsgrades für die Verschiebung der Höhenlage. Der Quernutanteil der wenigstens einen Nutkombination realisiert bei Vorsprungeingriff die Höhenlagefixierung.

Um die wenigstens temporär bei der Reifenvulkanisation herrschenden hohen Zugkräfte im Zugmantel des Behandlungsraumes sowie die generell erheblichen Kraft-und Druckbelastungen ohne Strukturverlust und im Rahmen einer extremen Vielzahl von Lastspielen aufnehmen zu können, sind die Fixierungsmittel gegen Dauerfestigkeit ausreichend dimensioniert.

In einer besonders vorteilhaften Ausgestaltung der Erfindung ist daran gedacht, wenigstens zwei Fixierungsmittel bestehend aus jeweils wenigstens einer Kombination von Vorsprung mit Längs- und Quernutkombination vorzusehen. Auf diese Weise lassen sich unerwünschte Biegespannungen in den Bauteilen reduzieren. Darüber hinaus ist diese wenigstens zwei Punkte umfassende Fixierung statisch bestimmt, sodass eine gleichmäßigere Lastverteilung während der Geschlossenstellung des Behandlungsraumes erzielt wird.

In einer weiteren vorteilhaften Ausgestaltung der Erfindung ist vorgesehen, die mit dem wenigstens einen Vorsprung funktionell-korrespondierende wenigstens eine Längs- und Quernutkombination innenseitig in dem Zugmantel anzuordnen. In dieser Ausgestaltungsvariante ist der wenigstens eine korrespondierende Vorsprung in einer sich radial nach außen erstreckenden Weise ausgebildet. Die Anordnung von Fixierungsmitteln innenseitig des Zugmantels unterstützt eine raumsparende und kompakte Gesamtkonstruktion. Darüber hinaus vergleichmäßigt sich der Spannungsverlauf im Innern der Bauteile durch die Minimierung von Kraftlinienumlenkungen zum einen und die Vermeidung von Biegespannungen zum anderen.

Um die auftretenden Kräfte optimal in abstützender Weise aufnehmen zu können, ist in einer Gestaltungsvariante vorgesehen, dass der wenigstens eine Vorsprung an der Grundplatte der Reifenvulkanisiermaschine verortet ist. Die Grundplatte als funktionstechnisches Widerlager zur Formdruckplatte und damit als Aufnahmeelement der Krafteinwirkung der Schliesskrafteinheit sorgt auf diese Weise dafür, dass sich die Schließ-, Druck- und Presskräfte auf den Bereich des Behandlungsraumes beschränken beziehungsweise eingrenzen lassen. Infolge dessen können die Bewegungseinrichtungen und/oder die tragenden Elemente der Reifenvulkanisiermaschine einzig auf ihre jeweilige Funktion hin dimensioniert werden. Dadurch wird eine kostenreduzierende Bauweise unterstützt und ein größerer freier Handhabungsraum geschaffen.

Ein weiterer Erfindungsgedanke betrifft die Einstellbarkeit der Höhenlagefixierung. Die Fixierung in unterschiedlichen Höhenlagen unterstützt auf einfache und schnelle Weise die Vulkanisation von Reifen unterschiedlicher Dimension und ermöglicht den unkomplizierten Chargenwechsel der Reifenherstellungsanlage. Zur Einstellbarkeit der Höhenlagefixierung kann vorgesehen werden, dass die Längs- und Quernutkombination in geeigneter Weise ausgestaltet ist. Dazu können der wenigstens einen Längsnut wenigstens zwei Quernuten zugeordnet und derart ausgestaltet sein, dass der wenigstens eine Vorsprung wahlweise in die erste oder die zweite Quernut einfahren und eingreifen kann. Die wenigstens zwei Quernuten sind in axialer Erstreckung des Zugmantels unterschiedlichen Höhenpositionen angeordnet, sodass sich wenigstens zwei voneinander abweichende Höhenpositionen des Zugmantels fixieren lassen.

Ein Ausführungsbeispiel der erfindungsgemäßen Höhenlagefixierung für einen Zugmantel des Behandlungsraumes einer Reifenvulkanisiermaschine ist in den Figuren dargestellt. Es zeigen:
- Figur 1:: ein Ausführungsbeispiel der erfindungsgemäßen Fixierungsmittel (300) zur Höhenlagefixierung eines Zugmantels (50) des Behandlungsraumes (30) einer Reifenvulkanisiermaschine (200) in einer perspektivischen Gesamt-darstellung mit einem Teilschnitt in der x-z-Ebene und
- Figur 2:: die perspektivische Schnittdarstellung des Behandlungsraums (30) in einer Geschlossenstellung mit wenigstens an der Innenfläche des Zugman-tels (50) vorgesehenen Fixierungsmitteln (300) in Form von wenigstens einer Längs- und Quernutkombination (320) und der wenigstens einen Auskragung (310) und
- Figur 3:: in einer Seitenansicht die perspektivische Schnittdarstellung des Behandlungsraums (30) in einer Teil-Geöffnetstellung mit wenigstens an der Innenfläche des Zugmantels (50) vorgesehenen Fixierungsmitteln (300) in Form von wenigstens einer Längs- und Quernutkombination (320) und der wenigstens einen Auskragung (310) und
- Figur 4:: in einer Seitenansicht die perspektivische Schnittdarstellung des Behandlungsraums (30) in einer Geöffnetstellung und
- Figur 5:: in einer Seitenansicht die perspektivische Schnittdarstellung des Behandlungsraums (30) in einer Geschlossenstellung mit einer ersten Höhenlagefixierung des Zugmantels (50) relativ zur Grundplatte (10) und
- Figur 6:: in einer Seitenansicht die perspektivische Schnittdarstellung des Behandlungsraums (30) in einer Geschlossenstellung mit einer zweiten Höhenlagefixierung des Zugmantels (50) relativ zur Grundplatte (10) und
- Figur 7:: in einer Seitenansicht die perspektivische Schnittdarstellung des Behandlungsraums (30) in einer Geschlossenstellung mit einer dritten Höhenlagefixierung des Zugmantels (50) relativ zur Grundplatte (10).

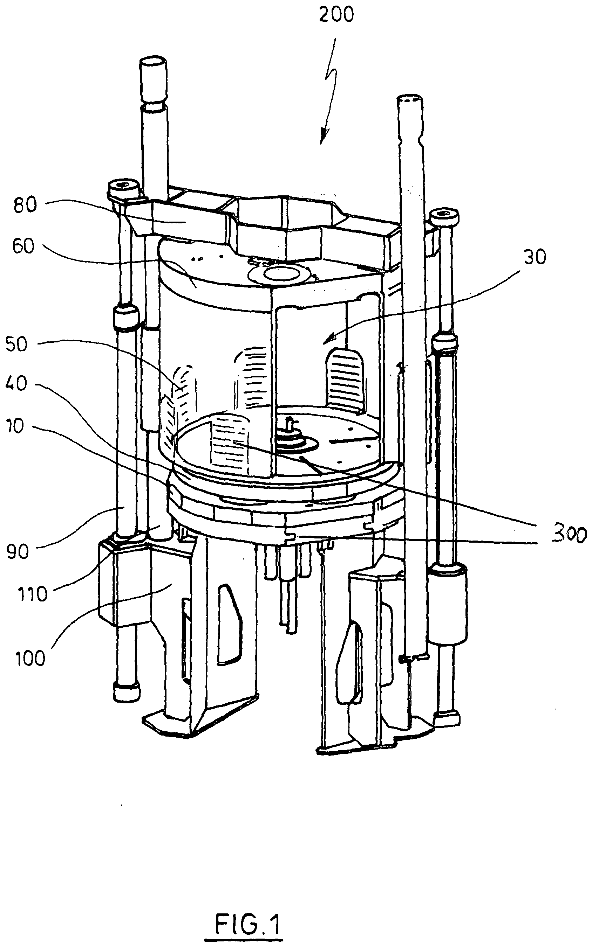

Figur 1 zeigt ein Ausführungsbeispiel der erfindungsgemäßen Fixierungsmittel (300) zur Höhenlagefixierung eines Zugmantels (50) des Behandlungsraumes (30) einer Reifenvulkanisiermaschine (200) in einer perspektivischen Gesamtdarstellung mit einem Teilschnitt in der x-z-Ebene.

Die Reifenvulkanisiermaschine beziehungsweise Reifenheizpresse (200) ist in diesem Beispiel als Säulenpresse aufgebaut und verfügt in ihrer tragenden Gesamtkonstruktion über ein Maschinenbett (100) mit Säulen (110), einer Traverse (80) und einer Grundplatte (10).

Ist die Reifenheizpresse (200) beispielsweise als Rahmen- oder Ständerpresse aufgebaut, sind statt der Säulen Rahmen oder Ständer verwendet, die häufig integrativer Teil des Maschinenbettes sind und Halte- sowie Führungsaufgaben übernehmen. In allen Ausführungsformen der Reifenheizpresse (200) kann ein Behandlungsraum (30) vorgesehen werden.

Funktionelles Kernelement der Reifenvulkanisiermaschine (200) ist der Behandlungsraum (30), dessen räumlich Erstreckung begrenzt ist durch die Formdruckplatte (40), beziehungsweise die Grundplatte (10) und die Formgegendruckplatte (60) sowie einen vorzugsweise zylindrischen Zugmantel (50). Neben der Begrenzung des Vulkanisierungsraumes (30) sind dem Zugmantel (50) zwei weitere funktionelle Aufgaben zugeordnet: Infolge der Druckkräfte innerhalb des Vulkanisierungsraumes (30) während der Vulkanisation des Reifenrohlings nimmt der Zugmantel (50) die resultierenden (Zug)Kräfte in axialer Richtung auf und er wirkt isolierend hinsichtlich der im Vulkanisierungsraum (30) herrschenden Vulkanisierungstemperaturen von bis zu 160 GradC, teilweise auch höher.

Die Formdruckplatte (40) ist sowohl linearaxial verschiebbar als auch kraftbeaufschlagbar, sodass im Behandlungsraum (30) eine Presskraft aufbaubar und dessen Volumina einstellbar ist. Die Formgegendruckplatte (60) stellt zur Formdruckplatte (40) praktisch das Widerlager für die Schließ- und Presskräfte dar, wobei der Zugmantel (50) den Kraftschluss zwischen den Platten (10, 40, 60) herstellt.

Vorzugsweise ist der Zugmantel (50) an der Formgegendruckplatte (60) festgelegt und als gemeinsame Baueinheit axial verfahrbar. Geführt wird die Formgegendruckplatte (60) zusammen mit dem Zugmantel (50) über eine Traverse (80) durch zwei Säulen (110).

Die Bewegungseinrichtung wird gebildet durch einen axialen Verfahrantrieb für die Baueinheit Formgegendruckplatte (60) mit Zugmantel (50) und ist im vorliegenden Beispiel durch zwei Fluidzylinder (90) realisiert, die eine Wirkverbindung von Traverse (80) zum Maschinenbett (100) herstellen und vorzugsweise doppeltwirkend sind.

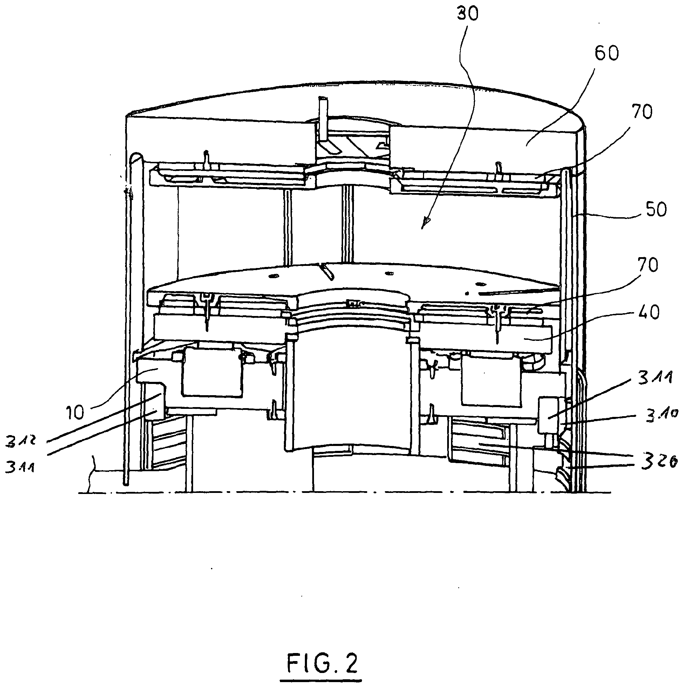

Figur 2 zeigt die perspektivische Schnittdarstellung des Behandlungsraums (30) in einer Geschlossenstellung mit wenigstens an der Innenfläche des Zugmantels (50) vorgesehenen Fixierungsmitteln (300) in Form von wenigstens einer Längs- und Quernutkombination (320) und der wenigstens einen Auskragung (310).

Wesentliche Bestandteile des Behandlungsraums (30) sind die Grundplatte (10), die Formdruckplatte (40), die Formgegendruckplatte (60) und der Zugmantel (50). Optionale Adapterplatten (70) können zur Festlegung von Reifenformhälften an der Formdruckplatte (40) und/oder der Formgegendruckplatte (60) vorgesehen sein.

Angrenzend an den Behandlungsraum (30) positioniert und diesen thermisch gesehen an einer Stirnseite abschließend ist die Grundplatte (10) als tragende Basis für weitere Baueinheiten zur Behandlung und Vulkanisierung von Reifenrohlingen. Das in Figur 2 gezeigte Beispiel realisiert die angrenzende Positionierung der Grundplatte (10) an den Behandlungsraum (30) durch die lotrechte und konzentrische Lage unterhalb der Formdruckplatte (40).

Die mit der wenigstens einen Längs- und Quernutkombination (320) korrespondierenden wenigstens eine Auskragung (310) ist an einem Bajonettring (311) festgelegt oder dessen integraler Bestandteil. Der Bajonettring (311) ist vorzugsweise mit einem rotativen Freiheitsgrad relativ zur Grundplatte (10) beweglich festgelegt und kann über eine stirnseitige Anlageschulter (312) auftretende Zugkraft-Widerlagerkräfte des Zugmantels (50) aufnehmen, wenn die Fixierungsmittel (300) in der Verriegelungsposition im Eingriff sind.

Aus dem funktionalen Zusammenwirken der korrespondierenden Fixierungsmittel (300) können während des Eingriffs der wenigstens einen Auskragung (310) in die wenigstens eine Längs- und Quernutkombination (320) zwei Positionszustände verwirklicht werden:
- liegt der Eingriff der Auskragung im Bereich der Längsnut vor, ist eine Höhenlageveränderung des Zugmantels (50) relativ zur Grundplatte (10) durch den dann vorliegenden axialen Freiheitsgrad unterstützt,
- liegt der Eingriff der Auskragung im Bereich einer Quernut vor, ist die Höhenlage des Zugmantels (50) relativ zur Grundplatte (10) durch den dann formschlüssig verhinderten axialen Freiheitsgrad unterdrückt - die Fixierungsmittel befinden sich dann in der Verriegelungsposition.

Die Lageveränderung der wenigstens einen Auskragung (310) aus einem Bereich der Längsnut in den Bereich einer Quernut wird erreicht durch eine Drehbewegung des Bajonettrings (311) mit einem geeigneten Bogenmaßbetrag. Die Drehbewegung kann initiiert werden, wenn die Auskragung in Umfangsrichtung fluchtend zu einer Quernut positioniert ist.

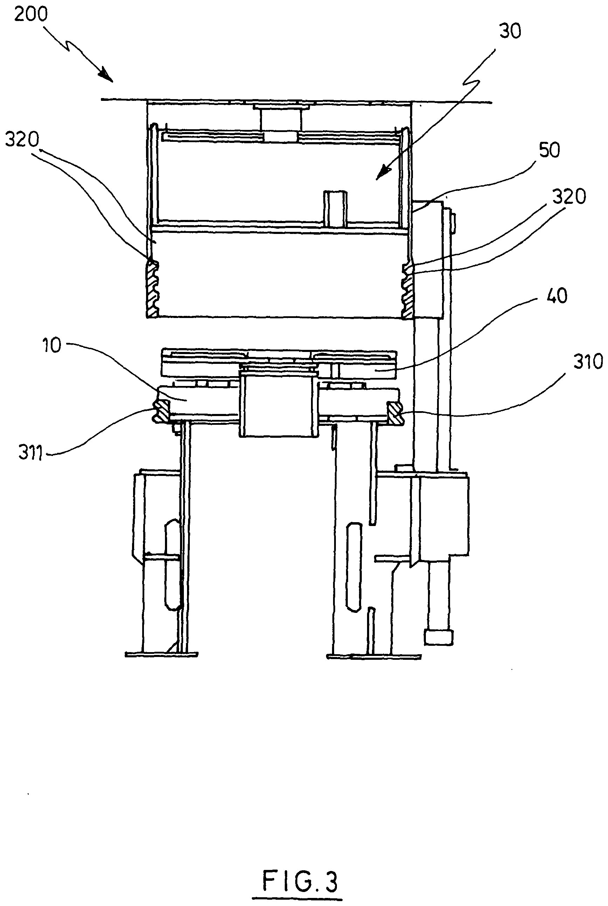

Figur 3 bildet die Seitenansicht der perspektivischen Schnittdarstellung des Behandlungsraums (30) in einer Teil-Geöffnetstellung mit wenigstens an der Innenfläche des Zugmantels (50) vorgesehenen Fixierungsmitteln (300) in Form von wenigstens einer Längs- und Quernutkombination (320) und der wenigstens einen Auskragung (310) ab.

In Figur 3 ist zu erkennen, dass dieses Ausführungsbeispiel der Erfindung mehrere über dem Umfang des Zugmantels (50) (hier symmetrisch) verteilte Längs- und Quernutkombinationen (320) aufweist, die mit jeweils axial fluchtend an dem Bajonettring (311) und in korrespondierender Weise angeordneten Auskragungen (310) zusammenwirken. Mit dieser Mehrfachanordnung von Fixiermitteln (300, 310, 320) kann eine erhebliches lokales Belastungsmaximum verhindert werden dadurch, dass eine statisch bestimmte Lastverteilung unterstützt ist.

Weiterhin zeigt dieses exemplarische Ausführungsbeispiel jeweils drei Quernuten (320) in axialer Richtung parallel übereinander angeordnet und derart geometrisch ausgebildet, dass eine Auskragung (310) in Eingriff gebracht werden kann. Auf diese Weise ist eine Höhenlageeinstellung in drei Fixierpositionen möglich.

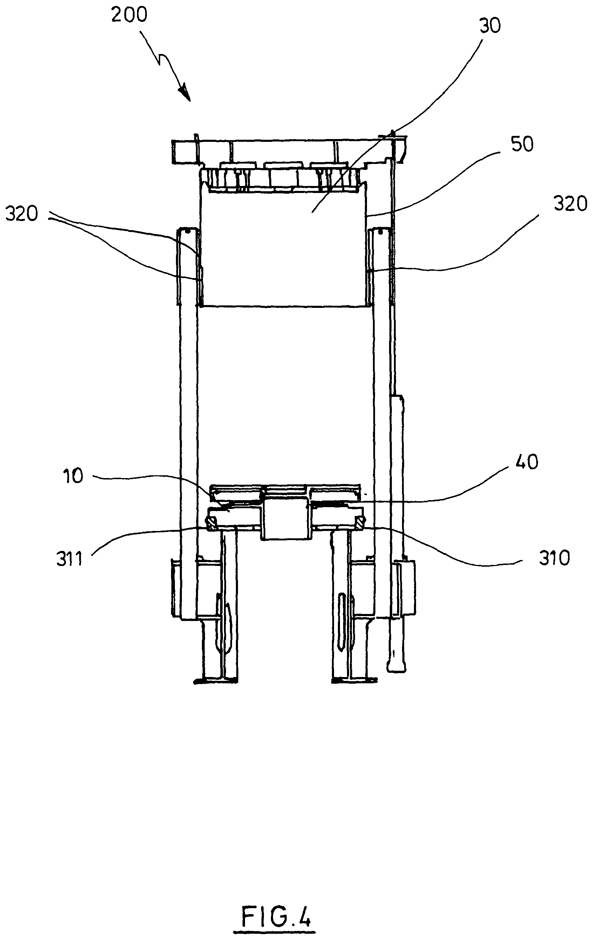

Figur 4 zeigt in einer Seitenansicht die perspektivische Schnittdarstellung des Behandlungsraums (30) in einer Geöffnetstellung mit maximal möglicher lichter Weite zwischen Grundplatte (10) und Zugmantel (50). Der dargestellte geöffnete Behandlungsraum (30) ist pressenbautechnisch eine Kavität und ermöglicht in der gezeigten Geöffnetstellung die Realisierung der Handhabungsfunktion, insbesondere das Beladen mit Reifenrohlingen und/oder das Entladen von vulkanisierten Fertigreifen.

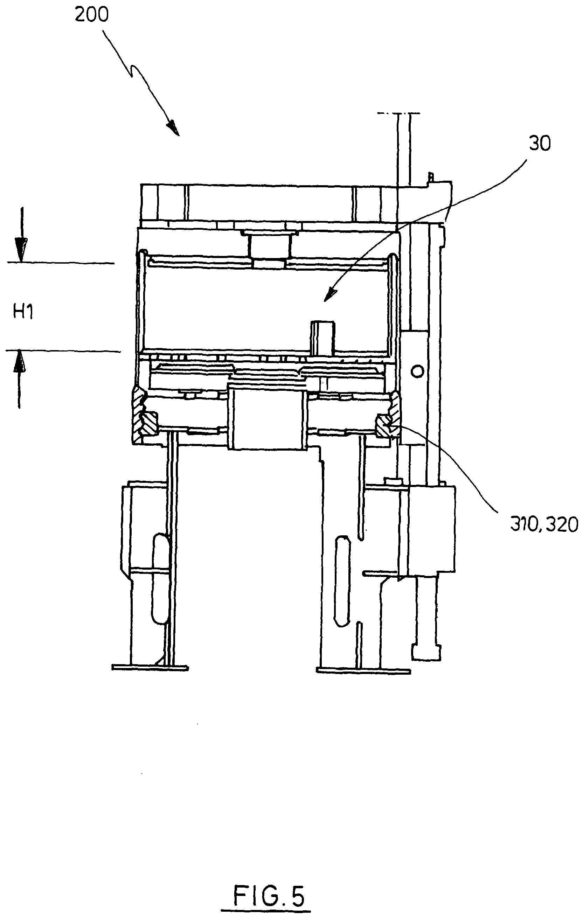

Figur 5 zeigt in einer Seitenansicht die perspektivische Schnittdarstellung des Behandlungsraums (30) in einer Geschlossenstellung mit einer ersten Höhenlagefixierung (H1) des Zugmantels (50) relativ zur Grundplatte (10). Die Fixiermittel (310, 320) greifen ähnlich einer Nut-Feder-Anordnung formschlüssig ineinander, sodass axial gerichtete Längskräfte zwischen der Grundplatte (10) und dem Zugmantel (50) übertragbar sind.

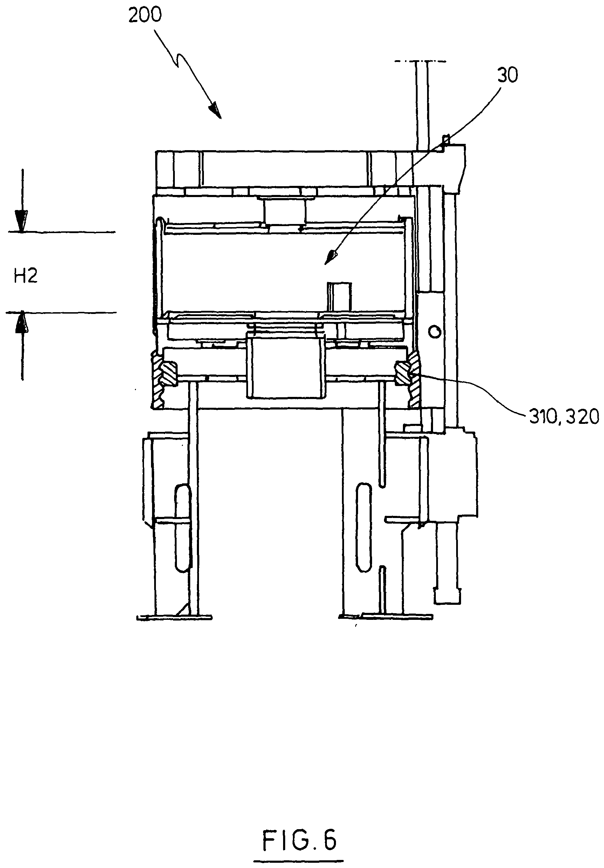

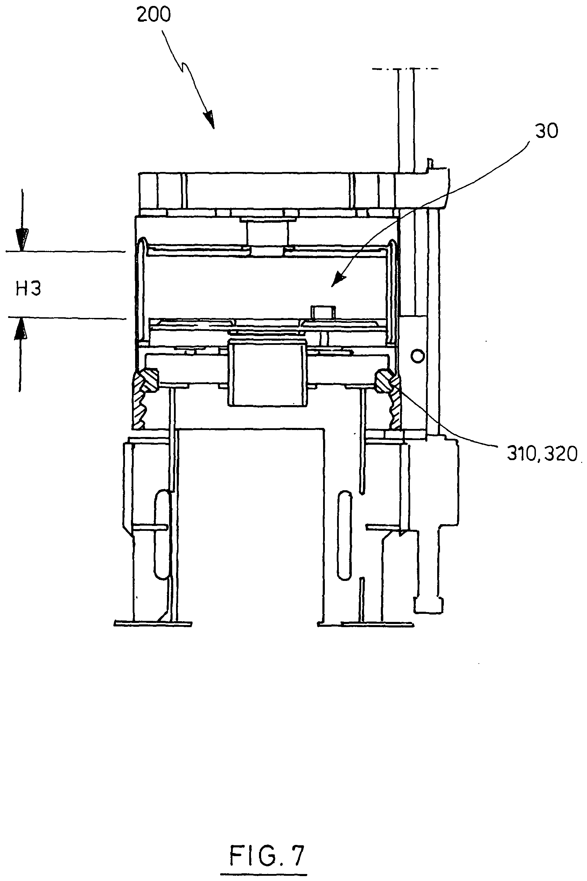

Figur 6 und 7 zeigen analog zu Figur 5 die unterstützten weiteren Höhenlagefixierungen (H2, H3) des Zugmantels (50) relativ zur Grundplatte (10). Das in den Figuren gezeigte Ausführungsbeispiel hat derart zueinander angeordnete Quernuten, die folgende Höhenlagemaße unterstützen: H1>H2>H3.

## Patentansprüche

1. Höhenlagefixierung eines Behandlungsraumes (30) innerhalb einer Reifenvulkanisiermaschine (200) zur Festlegung von Behandlungsraumelementen (40, 50, 60) zumindest während eines Vulkanisationsprozesses, sodass in der Geschlossenstellung wenigstens ein definierter Höhenabstand H fixierbar ist und wobei Fixierungsmittel (300) an zumindest einem Behandlungsraumelement (40, 50, 60) vorgesehen und derart ausgebildet sind, dass eine lösbare und eine die auftretenden Kräfte aufnehmende Fixierung unterstützt ist, **dadurch gekennzeichnet, dass** die Fixierungsmittel (300) wenigstens im Bereich eines Zugmantels (50) derart vorgesehen sind, dass die Fixierungsmittel (300) wenigstens in einem Abschnitt der Innenwandung des Zugmantels (50) vorgesehen sind und dass die Fixierungsmittel (300) durch wenigstens eine Längs- und Quernutkombination (320) gebildet sind.

2. Höhenlagefixierung eines Behandlungsraumes (30) nach Anspruch 1 oder 2, **dadurch gekennzeichnet, dass** die Fixierungsmittel (300) eine Höhenlagefixierung der Behandlungsraumelemente (40, 50, 60) relativ zueinander unterstützen.

3. Höhenlagefixierung eines Behandlungsraumes (30) nach Anspruch 2, **dadurch gekennzeichnet, dass** die Längs- und Quernutkombination (320) wenigstens zwei in axialer Richtung übereinanderliegende Quernuten aufweist, sodass die Fixierung der Geschlossenstellung von wenigstens zwei definierten Höhenabständen H1, H2 unterstützt ist.

4. Höhenlagefixierung eines Behandlungsraumes (30) nach Anspruch 3, **dadurch gekennzeichnet, dass** die Fixierungsmittel (300) durch eine Mehrzahl von Längs- und Quernutkombinationen (320) gebildet sind.

5. Höhenlagefixierung eines Behandlungsraumes (30) nach Anspruch 4, **dadurch gekennzeichnet, dass** die Mehrzahl von Fixierungsmitteln (300) symmetrisch oder asymmetrisch am Umfang der Innenwandung des Zugmantels (50) angeordnet sind.

6. Höhenlagefixierung eines Behandlungsraumes (30) nach Anspruch 5, **dadurch gekennzeichnet, dass** die Fixierungsmittel (300) wenigstens eine Auskragung (310) umfassen, die mit der wenigstens einen Längs- und Quernutkombination (320) korrespondiert und funktional zusammenwirkt.

7. Höhenlagefixierung eines Behandlungsraumes (30) nach Anspruch 6, **dadurch gekennzeichnet, dass** die wenigstens eine Auskragung (310) an einem Bajonettring (311) festgelegt ist.

8. Höhenlagefixierung eines Behandlungsraumes (30) nach Anspruch 7, **dadurch gekennzeichnet, dass** der Bajonettring (311) über eine stirnseitige Anlageschulter (312) an der Grundplatte (10) beweglich festgelegt ist.

9. Höhenlagefixierung eines Behandlungsraumes (30) nach Anspruch 8, **dadurch gekennzeichnet, dass** die bewegliche Festlegung des Bajonettrings (311) einen rotativen Freiheitsgrad umfasst, sodass dieser zwischen einer Verriegelungsposition und einer Position, in der die Fixiermittel (300) die axiallineare Bewegbarkeit von Behandlungsraumelementen (450, 60) unterstützt, schwenkbar ist.

10. Höhenlagefixierung eines Behandlungsraumes (30) nach Anspruch 9, **dadurch gekennzeichnet, dass** der rotative Freiheitsgrad eine Strecke längs dem Bogenmaß von ca. 1/8PI entspricht.

11. Höhenlagefixierung eines Behandlungsraumes (30) nach Anspruch 1, **dadurch gekennzeichnet, dass** die Fixierungsmittel (300, 310, 311, 312, 320) derart ausgebildet sind, dass in der Verriegelungsposition Zugmantelkräfte aufnehmbar sind.

12. Höhenlagefixierung eines Behandlungsraumes (30) nach Anspruch 1, **dadurch gekennzeichnet, dass** die Fixierungsmittel (300, 310, 311, 312, 320) derart angeordnet sind, dass in der Verriegelungsposition Biegespannungen im Zugmantel (50) reduziert sind.

13. Höhenlagefixierung eines Behandlungsraumes (30) nach Anspruch 1, **dadurch gekennzeichnet, dass** die Fixierungsmittel (300) eine Höhenlagefixierung der Behandlungsraumelemente (40, 50, 60) relativ zur Grundplatte (10) unterstützen.

14. Zugmantel (50) für den Behandlungsraum (30) einer Reifenvulkanisiermaschine (200) aufweisend Fixierungsmittel (300, 320) zur Höhenlagefixierung eines Behandlungsraumes (30) nach einem der vorgehenden Ansprüche.

15. Behandlungsraum (30) für eine Reifenvulkanisiermaschine (200) aufweisend einen Zugmantel (50) nach Anspruch 14.

16. Reifenvulkanisiermaschine (200) aufweisend einen Behandlungsraum (30) nach Anspruch 15.

## Claims

1. Vertical position fixing of a treatment chamber (30) inside a tire vulcanizing machine (200) for the fastening of treatment chamber elements (40, 50, 60) at least during a vulcanization process so that in the closed position at least one defined vertical distance H can be fixed and wherein fixing means (300) are provided on at least one treatment chamber element (40, 50, 60) and are designed in such a way that a fixing which is releasable and absorbs the occurring forces is facilitated, **characterized in that** the fixing means (300) are provided at least in the region of a tension casing (50) in such a way that the fixing means (300) are provided at least in a section of the inner wall of the tension casing (50) and that the fixing means (300) are formed by means of at least one longitudinal and transverse groove combination (320).

2. Vertical position fixing of a treatment chamber (30) according to Claim 1 or 2, **characterized in that** the fixing means (300) facilitate a vertical position fixing of the treatment chamber elements (40, 50, 60) relative to each other.

3. Vertical position fixing of a treatment chamber (30) according to Claim 2, **characterized in that** the longitudinal and transverse groove combination (320) has at least two transverse grooves which lie one above the other in the axial direction so that the fixing of the closed position of at least two defined vertical distances H1, H2 is facilitated.

4. Vertical position fixing of a treatment chamber (30) according to Claim 3, **characterized in that** the fixing means (300) are formed by a multiplicity of longitudinal and transverse groove combinations (320).

5. Vertical position fixing of a treatment chamber (30) according to Claim 4, **characterized in that** the multiplicity of fixing means (300) are arranged symmetrically or asymmetrically on the circumference of the inner wall of the tension casing (50).

6. Vertical position fixing of a treatment chamber (30) according to Claim 5, **characterized in that** the fixing means (300) comprise at least one protrusion (310) which corresponds to and functionally interacts with the at least one longitudinal and transverse groove combination (320).

7. Vertical position fixing of a treatment chamber (30) according to Claim 6, **characterized in that** the at least one protrusion (310) is fastened on a bayonet ring (311).

8. Vertical position fixing of a treatment chamber (30) according to Claim 7, **characterized in that** the bayonet ring (311) is movably fastened on the bottom plate (10) via an end-face abutment shoulder (312).

9. Vertical position fixing of a treatment chamber (30) according to Claim 8, **characterized in that** the movable fastening of the bayonet ring (311) comprises a rotational degree of freedom so that this can be pivoted between a locking position and a position in which the fixing means (300) facilitate the axial-linear movability of the treatment chamber elements (450, 60).

10. Vertical position fixing of a treatment chamber (30) according to Claim 9, **characterized in that** the rotational degree of freedom corresponds to a distance along the radian measure of approximately 1/8P1.

11. Vertical position fixing of a treatment chamber (30) according to Claim 1, **characterized in that** the fixing means (300, 310, 311, 312, 320) are designed in such a way that tension casing forces can be absorbed in the locking position.

12. Vertical position fixing of a treatment chamber (30) according to Claim 1, **characterized in that** the fixing means (300, 310, 311, 312, 320) are arranged in such a way that bending stresses in the tension casing (50) are reduced in the locking position.

13. Vertical position fixing of a treatment chamber (30) according to Claim 1, **characterized in that** the fixing means (300) facilitate a vertical position fixing of the treatment chamber elements (40, 50, 60) relative to the bottom plate (10).

14. Tension casing (50) for the treatment chamber (30) of a tire vulcanizing machine (200) having fixing means (300, 320) for the vertical position fixing of a treatment chamber (30) according to one of the preceding claims.

15. Treatment chamber (30) for a tire vulcanizing machine (200) having a tension casing (50) according to claim 14.

16. Tire vulcanizing machine (200) having a treatment chamber (30) according to claim 15.

## Revendications

1. Fixation de la position en hauteur d'une chambre de traitement (30) à l'intérieur d'une machine de vulcanisation de pneus (200) pour la fixation d'éléments de chambre de traitement (40, 50, 60) au moins pendant un processus de vulcanisation de telle sorte que dans la position fermée, au moins une distance en hauteur définie H puisse être fixée, et dans laquelle des moyens de fixation (300) sont prévus et réalisés au niveau d'au moins un élément de chambre de traitement (40, 50, 60) de telle sorte qu'une fixation amovible et recevant les forces présentes soit supportée, **caractérisée en ce que** les moyens de fixation (300) sont prévus au moins dans la région d'une enveloppe de traction (50) de telle sorte que les moyens de fixation (300) soient prévus au moins dans une portion de la paroi intérieure de l'enveloppe de traction (50) et **en ce que** les moyens de fixation (300) sont formés par au moins une combinaison de rainures longitudinales et de rainures transversales (320).

2. Fixation de la position en hauteur d'une chambre de traitement (30) selon la revendication 1 ou 2, **caractérisée en ce que** les moyens de fixation (300) supportent une fixation de la position en hauteur des éléments de chambre de traitement (40, 50, 60) les uns par rapport aux autres.

3. Fixation de la position en hauteur d'une chambre de traitement (30) selon la revendication 2, **caractérisée en ce que** la combinaison de rainures longitudinales et de rainures transversales (320) présente au moins deux rainures transversales superposées dans la direction axiale de telle sorte que la fixation de la position fermée soit supportée par au moins deux distances en hauteur définies (H1, H2).

4. Fixation de la position en hauteur d'une chambre de traitement (30) selon la revendication 3, **caractérisée en ce que** les moyens de fixation (300) sont formés par une pluralité de combinaisons de rainures longitudinales et de rainures transversales (320).

5. Fixation de la position en hauteur d'une chambre de traitement (30) selon la revendication 4, **caractérisée en ce que** la pluralité de moyens de fixation (300) sont disposés symétriquement ou asymétriquement sur la périphérie de la paroi intérieure de l'enveloppe de traction (50).

6. Fixation de la position en hauteur d'une chambre de traitement (30) selon la revendication 5, **caractérisée en ce que** les moyens de fixation (300) comprennent au moins une saillie (310) qui correspond et coopère fonctionnellement avec l'au moins une combinaison de rainures longitudinales et de rainures transversales (320).

7. Fixation de la position en hauteur d'une chambre de traitement (30) selon la revendication 6, **caractérisée en ce que** l'au moins une saillie (310) est fixée à une bague de baïonnette (311).

8. Fixation de la position en hauteur d'une chambre de traitement (30) selon la revendication 7, **caractérisée en ce que** la bague de baïonnette (311) est fixée de manière déplaçable sur la plaque de base (10) par le biais d'un épaulement d'appui frontal (312).

9. Fixation de la position en hauteur d'une chambre de traitement (30) selon la revendication 8, **caractérisée en ce que** la fixation déplaçable de la bague de baïonnette (311) comprend un degré de liberté en rotation de telle sorte que celle-ci puisse pivoter entre une position de verrouillage et une position dans laquelle les moyens de fixation (300) supportent la mobilité axiale linéaire d'éléments de chambre de traitement (450, 60) .

10. Fixation de la position en hauteur d'une chambre de traitement (30) selon la revendication 9, **caractérisée en ce que** le degré de liberté en rotation correspond à une distance le long de la dimension d'arc d'environ 1/8PI.

11. Fixation de la position en hauteur d'une chambre de traitement (30) selon la revendication 1, **caractérisée en ce que** les moyens de fixation (300, 310, 311, 312, 320) sont réalisés de telle sorte que les forces d'enveloppe de traction puissent être reçues dans la position de verrouillage.

12. Fixation de la position en hauteur d'une chambre de traitement (30) selon la revendication 1, **caractérisée en ce que** les moyens de fixation (300, 310, 311, 312, 320) sont disposés de telle sorte que les tensions de flexion dans l'enveloppe de traction (50) soient réduites dans la position de verrouillage.

13. Fixation de la position en hauteur d'une chambre de traitement (30) selon la revendication 1, **caractérisée en ce que** les moyens de fixation (300) supportent une fixation de la position en hauteur des éléments de chambre de traitement (40, 50, 60) par rapport à la plaque de base (10).

14. Enveloppe de traction (50) pour la chambre de traitement (30) d'une machine de vulcanisation de pneus (200) présentant des moyens de fixation (300, 320) pour la fixation de la position en hauteur d'une chambre de traitement (30) selon l'une quelconque des revendications précédentes.

15. Chambre de traitement (30) pour une machine de vulcanisation de pneus (200) présentant une enveloppe de traction (50) selon la revendication 14.

16. Machine de vulcanisation de pneus (200) présentant une chambre de traitement (30) selon la revendication 15.
